# EUROPÄISCHE PATENTSCHRIFT

(11) **EP 2 046 550 B1**
(45) Veröffentlichungstag und Bekanntmachung des Hinweises auf die Patenterteilung: **23.12.2009**
(21) Anmeldenummer: 07786607.7
(22) Anmeldetag: 31.07.2007
(51) Int. Cl.: B29C 44/12, B29C 44/14, B60R 13/02

(54) **VERKLEIDUNG MIT MEHRTEILIGER DECKSCHICHT UND VERFAHREN ZU IHRER HERSTELLUNG**
CLADDING WITH MULTIPART OUTER LAYER AND METHOD FOR ITS PRODUCTION
HABILLAGE PRÉSENTANT UNE COUCHE DE RECOUVREMENT EN PLUSIEURS PARTIES ET PROCÉDÉ POUR SA FABRICATION

(30) Priorität: 31.07.2006 DE 102006036535; 29.09.2006 DE 102006047355
(43) Veröffentlichungstag der Anmeldung: 15.04.2009
(73) Patentinhaber: Faurecia Innenraum Systeme GmbH, 76767 Hagenbach (DE)
(72) Erfinder: KOBER, Steve, 08233 Treuen (DE); BRAUN, Marko, 76848 Lug (DE); PROKOP, Jürgen, 76829 Landau (DE); HEINZ, Claus, 76764 Rheinzabern (DE); BAUMANN, Bernhard, 67363 Lustadt (DE); MEYER, Andreas, 76770 Hatzenbühl (DE); HEMBERGER, Bernd, 76863 Herxheim (DE); KÖTTNER, Christian, 76344 Eggenstein (DE)
(74) Vertreter: Pfenning, Meinig & Partner GbR
(86) Internationale Anmeldenummer: PCT/EP2007/006982
(87) Internationale Veröffentlichungsnummer: WO 2008/015025

(56) Entgegenhaltungen:
- EP-A- 1 378 339
- WO-A-03/058005
- JP-A- 2002 052 548

## Beschreibung

Die Erfindung betrifft eine Verkleidung mit mehrteiliger Deckschicht sowie ein Verfahren zu ihrer Herstellung.

Es sind Verbundteile, insbesondere Innenverkleidungen von Fahrzeugen bekannt, welche zwei die sichtseitige Oberfläche der Verkleidung bildende zueinander benachbarte Häute, einen Träger und eine zwischen dem Träger und den Häuten liegende Schaumschicht aufweisen. Die Häute können eine unterschiedliche Farbe und/oder eine unterschiedliche Oberflächenstruktur aufweisen, wodurch die Verkleidung eine mehrteilige, bereichsweise unterschiedliche Oberfläche besitzt.

Eine derartige gattungsbildende Verkleidung wird durch die Druckschrift JP 2002052548 offenbart. Die dort offenbarte Verkleidung weist zwei Häute auf, die sich in ihren Randbereichen flächig überlappen. Der Träger weist mehrere voneinander beabstandete schmale Rippen auf, die mit der inneren Haut im Überlappungsbereich der Häute direkt in Kontakt ist. Der Zweck dieser Rippen ist durch das Herstellungsverfahren begründet, bei dem es gilt, den Überlappungsbereich der Häute während des Schäumprozesses schaumdicht zu halten. Die Schaumdichtigkeit wird dadurch erreicht, dass die Rippen die beiden Häute im Überlappungsbereiche zumindest während des Schäumvorganges schaumdicht in Kontakt halten.

Nachteil des in der JP 2002052548 offenbarten Verfahrens ist, dass eine genaue Platzierung der Häute, um einen reproduzierbaren Verlauf der sichtbaren Trennlinie zwischen den Häuten zu gewährleisten, sehr aufwendig ist. Entsprechend fehleranfällig und aufwendig ist die Herstellung eines derartigen Bauteils.

Die Druckschrift DE 100 44 627 A1 offenbart ebenfalls eine Verkleidung mit zwei aneinandergrenzenden Häuten, einem Träger und einer zwischen den Häuten und dem Träger liegenden Schaumschicht. Gemäß dem dort offenbarten Verfahren werden die Häute zunächst durch eine Klemmleiste kraftschlüssig gegeneinander gepresst, wodurch die später benötigte Schaumdichtigkeit erzielt werden soll. Die so miteinander verbundenen Häute werden in ein Schäumwerkzeug eingelegt und hinterschäumt.

Nachteil dieser Lösung ist, dass für das Erreichen der Schaumdichtigkeit ein zusätzliches Element, hier die Klemmleiste, benötigt wird.

Um dies zu verhindern, offenbart das Patent JP 3347850 B2 ein Verfahren, gemäß dem zwei Häute mit abgewinkelten Endbereichen an der Oberfläche eines Werkzeuges derart angeordnet werden, dass die abgewinkelten Endbereiche der ersten und zweiten Haut von der Oberfläche des Werkzeuges weggerichtet sind. Der Endbereich einer Haut weist zumindest einen Dichtabschnitt in Form einer Ausstülpung auf, der in eine korrespondierende Öffnung oder Ausbuchtung des gegenüberliegenden Endbereiches der anderen Haut eingreifen kann. Dementsprechend werden die beiden Häute dichtend miteinander verbunden. Danach werden die Häute miteinander verschäumt.

Nachteil dieser Lösung ist, dass, um eine ausreichende Dichtigkeit zu gewährleisten, die Dichtabschnitte relativ aufwendig ausgeführt werden müssen, dass die Häute zum Halten ihrer Form eine gewisse Steifigkeit aufweisen müssen, und dass auf eine exakte Anordnung der Häute geachtet werden muss.

Aufgabe der Erfindung ist es somit, eine Verkleidung mit zumindest zwei die sichtseitige Deckfläche der Verkleidung bildenden aneinandergrenzenden Häuten zu schaffen, die mit einer definiert verlaufenden Trennlinie kostengünstig herstellbar ist und keine komplizierte Form der Häute voraussetzt. Eine weitere Aufgabe der Erfindung ist es, ein einfaches Verfahren zur Herstellung einer derartigen Verkleidung zu schaffen, das auch eine ausreichende Dichtigkeit während des Hinterschäumens gewährleistet.

Diese Aufgaben werden durch eine Verkleidung und ein Verfahren nach den unabhängigen Ansprüchen gelöst.

Vorteilhafte Weiterbildungen sind in den abhängigen Ansprüchen beschrieben.

Die Erfindung schafft eine Verkleidung mit einer Deckschicht aus zwei aneinandergrenzenden flächigen Häuten, einem flächigen Träger und einer zwischen den Häuten und dem Träger liegenden Schaumschicht, wobei der Träger eine in Richtung der Häute offene, entlang des Grenzbereichs der beiden Häute verlaufende Nut aufweist, in die ein abgewinkelter Randbereich der ersten Haut und ein abgewinkelter Randbereich der zweiten Haut zumindest teilweise eingeführt sind.

Erfindungsgemäß wird die Schaumdichtigkeit der aneinander grenzenden Häute in ihrem gemeinsamen, eine Trennlinie bildenden Grenzbereich durch die vom Träger gebildeten Nut gewährleistet, in der die abgewinkelten Endbereiche der Häute eingeführt sind. Über die Festlegung des Verlaufs der Nut lässt sich exakt der Verlauf der Trennlinie der beiden aneinander grenzenden Häute festlegen, wodurch ein derartiges Bauteil gut reproduzierbar ist. Des Weiteren werden zur Fixierung der Häute in ihrem Grenzbereich keine zusätzlichen Elemente benötigt, wie beispielsweise eine Klemmleiste wie in der DE 100 44 627 offenbart. Hierdurch ist eine kostengünstige Herstellung der Verteilung möglich.

Der Begriff "Haut" soll in diesem Kontext zumindest die für Dekoroberflächen von Innenverkleidungen üblicherweise verwendeten flächigen Elemente umfassen, insbesondere Gießhäute, Slushhäute und Folien, einschließlich mehrlagiger Folien.

Erfindungsgemäß ist es insbesondere möglich, mehrere Häute mit unterschiedlichen Eigenschaften und Kombinationen, insbesondere unterschiedlichen Farben, unterschiedlicher Oberflächentextur und/oder auch unterschiedlichem Material miteinander zu kombinieren, insbesondere auch, da sie über den Schaum miteinander fixiert werden.

Als Material für den Träger bieten sich polymere Werkstoffe, insbesondere polymere Kunststoffe, wie beispielsweise Polypropylen, POM oder PC/ABS an. Diesen können insbesondere auch Zusätze beigefügt sein, wie beispielsweise Fasern oder Mineralien.

Als Schaumschicht eignet sich beispielsweise ein geschäumtes Polyurethan oder ein geschäumtes Polyolefin.

Die erfindungsgemäßen Verkleidungen eignen sich insbesondere als Innenverkleidungen von Fahrzeugen, beispielsweise als Instrumententafel, Mittelkonsole oder als Türverkleidung.

Eine vorteilhafte Weiterbildung sieht vor, dass die abgewinkelten Randbereiche der beiden Häute entlang des Grenzbereiches flächig aneinander liegen.

Eine weitere vorteilhafte Weiterbildung sieht vor, dass die abgewinkelten Randbereiche der beiden Häute in der Nut entlang des Grenzbereiches eingeklemmt sind.

Eine weitere vorteilhafte Weiterbildung sieht vor, dass der obere Rand der Nut bis an die Rückseite zumindest einer Haut, vorzugsweise beider Häute heranreicht.

Eine weitere vorteilhafte Weiterbildung der Erfindung sieht vor, dass die Nut durch beidseitig des Grenzbereiches verlaufende, vom Träger geformte Stege gebildet wird.

Durch die Ausbildung der Nut weist das Verkleidung im Grenzbereich der beiden Häute in der Regel eine andere Haptik auf. Dadurch, dass die Nut durch schmale Stege gebildet wird, kann dieser Bereich möglichst schmal gehalten werden.

Als Alternative ist es beispielsweise möglich, eine geeignete Nut über eine Vertiefung oder Ausformung im Träger zu bilden.

Des Weiteren schafft die Erfindung ein Verfahren zur Herstellung einer Verkleidung mit zwei aneinandergrenzenden flächigen Häuten, einem flächigem Träger und einer zwischen den Häuten und dem Träger liegenden Schaumschicht, enthaltend die Schritte: a) Zumindest teilweises Einführen eines abgewinkelten Randbereichs der ersten Haut und eines abgewinkelten Randbereichs der zweiten Haut in eine vom Träger in Richtung der Häute offene, entlang des vorgesehenen Grenzbereichs der beiden Häute verlaufende Nut; b) Einbringen einer Schaummasse zwischen Träger und Häuten.

Vorzugsweise sind die Häute mit abgewinkelten Randbereichen hergestellt, d.h., die Randbereiche sind schon vorgeformt. Dies ermöglicht es, die Häute, ohne diese verbiegen zu müssen, in den Träger einzuführen.

Eine vorteilhafte Weiterbildung der Erfindung sieht vor, dass die abgewinkelten Randbereiche der Häute in der Nut eingeklemmt werden.

Die Häute werden damit kraftschlüssig in der Nut fixiert. Hiermit wird ein Schaumfluss zwischen den Seiten der Nut und den angrenzenden Außenflächen der abgewinkelten Randbereiche unterdrückt.

Eine weitere vorteilhafte Weiterbildung sieht vor, dass die Schaummasse rechts- und linksseitig des Grenzbereiches der Häute eingeführt wird.

Durch ein beidseitiges Einführen der Schaummasse kann verhindert werden, dass ein durch die Ausbreitung der Schaummasse verursachter zu hoher einseitiger Druck auf die Außenfläche eines abgewinkelten Randbereichs einer der Häute ausgeübt wird, was möglicherweise zu Schaumundichtigkeit und einer unerwünschten Verformung der Häute im Grenzbereich führen könnte.

Vorzugsweise wird die Schaummasse derart eingebracht, dass der Schaumfluss derart ist, dass sich die durch den Schaumfluss auf die Außenflächen der jeweiligen Randbereiche der beiden Häute bildenden Drücke im Wesentlichen kompensieren. Gleichermaßen werden die Innenflächen der Randbereiche durch den Druck zusammengepresst, wodurch sich die Schaumdichtigkeit in diesem Bereich erhöht.

Bei einem im Wesentlichen einseitigen Druck werden die übereinander liegenden Randbereiche der beiden Häute gegen, je nach Druckrichtung, die eine oder die andere Seitenwand der Nut gedrückt, wodurch sich ebenfalls die Schaumdichtigkeit der beiden aneinander grenzenden Häute entlang ihrer Trennlinie erhöht und somit ein Schaumaustritt verhindert werden kann.

Eine vorteilhafte Weiterbildung sieht ein Verfahren, enthaltend die Schritte vor: a) Anordnen eines Trägers in einer ersten Werkzeughälfte eines Werkzeugs; b) Anordnen einer ersten Haut und einer zweiten Haut mit zumindest zweifach abgewinkelten Endbereichen an der Oberfläche einer zweiten Werkzeughälfte derart, dass die ersten abgewinkelten Bereiche der ersten und zweiten Haut zum einen von der Oberfläche des Werkzeuges weggerichtet sind, und zum anderen zueinander benachbart sind, und derart, dass die zweiten abgewinkelten Bereiche der ersten und zweiten Haut voneinander weggerichtet sind und der Oberfläche des Trägers gegenüberliegen; c) Hinterschäumen der ersten und zweiten Haut.

Durch die Form und Lage der Endbereiche der beiden Häute werden zum einen die Häute durch die Schaummasse im ersten abgewinkelten Bereich gegeneinander, und im zweiten abgewinkelten Bereich in Richtung des Trägers gepresst. Durch die abgewinkelten Endbereiche ist der Weg, den die Schaummasse durchfließen müsste, um auf der Sichtseite der Häute auszutreten, relativ lang. Zum anderen kann der Druck der Schaumasse dazu genutzt werden, die Breite des Spaltes zwischen den ersten abgewinkelten Bereichen der Häute und zwischen den zweiten abgewinkelten Bereichen der Häuten und der Oberfläche des Trägers zu verringern, wenn nicht gar vollständig zu schließen. Hierüber ist es möglich, eine ausreichende Dichtigkeit gegen einen Schaumaustritt herzustellen.

Eine vorteilhafte Weiterbildung der Erfindung sieht vor, dass die Schaummasse derart in das Werkzeug eingebracht und möglicherweise zusätzlich gelenkt wird, dass die Schaumfronten die Endbereiche der Häute gleichzeitig erreichen.

Dies verhindert, dass durch einen zu starken einseitigen Druck der Schaummasse auf die Endbereiche die Endbereiche verkippt werden.

Vorzugsweise ist der Abstand zwischen den zweiten abgewinkelten Bereichen der Häute und der Oberfläche des gegenüberliegenden Bereichs des Trägers so klein gewählt, dass gewährleistet ist, dass die Schaummasse die Häute in diesen Bereichen flächig gegen den Träger presst.

Durch einen kleinen Abstand zweiter abgewinkelter Bereich - Oberfläche Träger werden zu dem die Endbereiche in ihrer Lage stabilisiert, da ein Umknicken der Endbereiche unterdrückt wird.

Vorzugsweise entspricht die Form der Oberfläche des Trägers im Bereich, der den zweiten abgewinkelten Bereichen der Häute gegenüberliegt, denen der abgewinkelten Bereiche der Häute.

Vorzugsweise sind die Endbereiche jeweils zweimal um 90° abgewinkelt.

Eine weitere vorteilhafte Weiterbildung der Erfindung sieht vor, dass die erste Haut und die zweite Haut jeweils an einer Seite eines sich an der Oberfläche der zweiten Werkzeughälfte befindenden Vorsprungs angeordnet werden.

Durch das Vorsehen eines derartigen Vorsprungs ist die Positionierung der Häute und damit der Verlauf der Trennlinie der beiden Häute genau festlegbar. Vorzugsweise folgt der Vorsprung dem gesamten Verlauf der gewünschten Trennlinie.

Eine weitere vorteilhafte Weiterbildung der Erfindung sieht vor, dass über den Vorsprung ein Unterdruck angelegt wird, der die Häute am Vorsprung fixiert. Durch einen Unterdruck können die Häute nicht nur am Vorsprung fixiert werden, sondern es ist auch möglich, den Unterdruck dafür auszunutzen, dass ein Spalt zwischen den benachbarten ersten abgewinkelten Bereichen der Häute geschlossen wird. Um in diesem Bereich einen Unterdruck anlegen zu können, weist der Vorsprung vorzugsweise ein poröses, gasdurchlässiges Material auf. Alternativ können beispielsweise beidseitig entlang des Vorsprungs Vakuumlöcher in der zweiten Werkzeughälfte vorgesehen sein.

Eine weitere vorteilhafte Weiterbildung der Erfindung sieht vor, dass der Vorsprung während des Aushärtens der Schaummasse zumindest teilweise in der zweiten Werkzeughälfte versenkt werden kann.

Durch das Versenken des Vorsprunges während des Aushärtens der Schaummasse wird ein Spalt zwischen den beiden ersten abgewinkelten Bereichen der beiden Häute freigegeben. Durch die Schaummasse werden die Häute gegeneinander gepresst, so dass dieser freigegebene Raum zumindest teilweise durch die nachrückenden Häute verschlossen wird.

Der Vorsprung kann vollständig versenkt, oder zur Erzeugung einer Design-Nut in einer Position, in der er zumindest teilweise in die Kavität hineinragt, belassen werden.

Eine weitere vorteilhafte Weiterbildung der Erfindung sieht vor, dass das Schäumwerkzeug im Bereich der abgewinkelten Endbereiche, vorzugsweise direkt über dem Vorsprung, über einen sich im Träger befindenden Entlüftungskanal entlüftet wird.

Ein derartiges Entlüften vereinfacht es, die Schaummasse beidseitig den Endbereichen der beiden Häute zuzuleiten, da sich im Bereich der Endbereiche keine Überdruckbereiche ausbilden können.

Vorzugweise wird die Entlüftung durch Anlegen eines Unterdruckes an dem Entlüftungskanal / an den Entlüftungskanälen unterstützt.

Die Erfindung wird nun anhand von Ausführungsbeispielen, die durch die Zeichnung dargestellt sind, näher erläutert. Es zeigen:
- Fig. 1: einen Schnitt durch ein Verkleidungsteil nach einem ersten Ausführungsbeispiel, und
- Fig. 2: einen Schnitt durch ein in einem Werkzeug befindliches Verkleidungsteil, nach einem zweiten Ausführungsbeispiel der Erfindung.

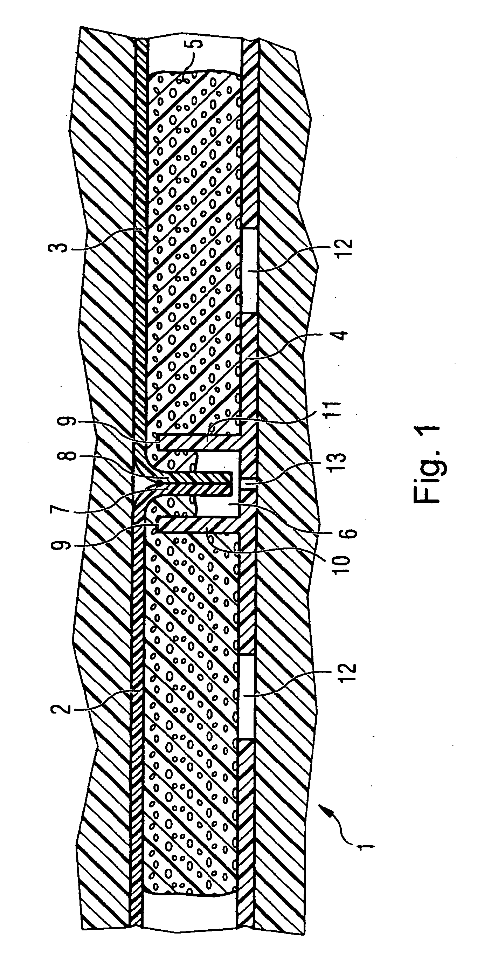

In Fig. 1 ist die sich nach Beendigung des Schäumverfahrens noch in einem Schäumwerkzeug befindende Verkleidung dargestellt. Die Ausführungsform der erfindungsgemäßen Verkleidung ist mit zwei aneinander grenzenden flächigen Häuten 2, 3, einem flächigen Träger 4 und einer zwischen den Häuten 2, 3 und dem Träger 4 liegenden Schaumschicht 5 zu verstehen, und wurde gemäß einer Ausführung des erfindungsgemäßen Verfahrens hergestellt.

Zur Herstellung einer derartigen Verkleidung werden gemäß der hier beschriebenen Ausführungsform ein rechtwinklig abgewinkelter Randbereich 7 der ersten Haut 2 und ein rechtwinklig abgewinkelter Randbereich der zweiten Haut in eine vom Träger 4 in Richtung der Häute offene, entlang eines vorgesehenen Grenzbereichs der beiden Häute verlaufende Nut 6 eingeführt. Die Randbereiche 7, 8 sind dabei mit einer derartigen Länge abgewinkelt, dass diese mit ihren Enden bis auf den Boden der Nut 6 stoßend eingeführt werden können, wobei der sich hierdurch ergebende Abstand zwischen Träger 4 und den Häuten 2, 3 der gewünschten Dicke der noch zu erzeugenden Schaumschicht 5 entspricht.

Die Nut 6 wird durch beidseitig des vorgesehenen Grenzbereichs der beiden Häute 2, 3 verlaufende, vom Träger 4 geformte Stege 10, 11 gebildet.

Der Träger 4 ist einstückig.

Der Abstand der Stege 10 und 11 ist derart gewählt, dass die Breite der hierdurch erzeugten Nut 6 geringfügig kleiner ist als die Breite der sich überdeckenden, in der Nut 6 eingeführten Randbereiche 7, 8. Aufgrund dessen sind die Randbereiche 7, 8 in der Nut 6 eingeklemmt und werden dadurch gegeneinander gepresst.

Die Stege bilden insbesondere zwei spiegelsymmetrische Seitenflächen der Nut 6. Durch diese werden die Randbereiche 7, 8 der Häute 2, 3 entlang des Verlaufs der Nut 6 flächig gegeneinander gepresst. Allerdings ist in der Figur die Breite der Nut 6 zur besseren Verdeutlichung des später beschriebenen Prozesses etwas breiter dargestellt, so dass der eben beschriebene Zustand nicht erkennbar ist.

Des Weiteren ist die Höhe der Stege 10, 11 derart gewählt, dass diese mit ihrem oberen Rand 9 an der Rückseite der Haut 2 bzw. Haut 3 anliegen.

Im nächsten Schritt wird in einem Schäumwerkzeug über Träger 4 vorgesehene Öffnungen 12 rechts- und linksseitig der Stege 10 und 11 eine Schaummasse in den Zwischenbereich zwischen den beiden Häuten 2, 3 und dem Träger 4 bei geschlossenem Schäumwerkzeug eingebracht.

Der Schaum breitet sich aus und trifft schließlich auf die Stege 10 und 11. Dadurch, dass der obere Rand der Stege 10, 11 bis an die Rückseite der Haut 2 bzw. 3 heranreicht, kann nur eine geringe Menge des Schaums in den Bereich der Nut 6 dringen. Dadurch, dass die Randbereiche 7, 8 in der Nut 6 eingeklemmt sind, wird zusätzlich verhindert, dass sich die Schaummasse im Bereich der Nut 6 weiter ausbreiten kann. Aufgrund dessen, dass die Enden der beiden Randbereich 7, 8 bis auf den Boden der Nut 6 reichen, ist zudem für den Schaum eine relativ große Strecke zu überwinden, bis dieser in den Zwischenbereich der beiden Randbereiche 7, 8 eindringen könnte. Des Weiteren wird durch in den Bereich der Nut 6 eindringenden Schaum die Innenflächen der beiden Randbereiche 7, 8 gegeneinander gepresst, was die Schaumdichtigkeit in diesem Bereich zusätzlich erhöht.

In diesem Ausführungsbeispiel wird die Schaummasse beidseitig des Grenzbereichs so eingeführt, dass die Schaummasse zum gleichen Zeitpunkt den Steg 10 und den Steg 11 erreicht, wodurch auf die Randbereiche 7, 8 der beiden Häute 2, 3 beidseitig ein Druck ausgeübt wird, der sich kompensiert, und wodurch das eben erwähnte Zusammenpressen der beiden Innenflächen der Randbereiche 7, 8 bewirkt wird.

Alternativ ist es ebenfalls möglich, die Schaummasse derart einzuführen, dass ein einseitiger Druck auf die sich überdeckenden Randbereiche 7, 8 ausgeübt wird. In diesem Falle drückt der Schaum die sich überdeckenden Randbereiche 7, 8 gegen die durch den Stege 10 oder 11 gebildete Innenfläche der Nut 6, wodurch ebenfalls die Innenflächen der Randbereiche 7, 8 zusammengepresst werden, was, wie oben schon gesagt, die Schaumdichtigkeit erhöht.

Um die Ausbreitung des Schaums nicht zu verhindern, ist am Boden der Nut 6 eine Entlüftung 13 vorgesehen.

Oben beschriebene Maßnahmen führen dazu, dass verhindert wird, dass Schaum durch den Grenzbereich der beiden Häute 2, 3 an die sichtseitige Oberfläche der Verkleidung 1 dringen kann.

Nach Beendigung des Schäumvorgangs und Ausreaktion kann die fertige Verkleidung 1 dem Schäumwerkzeug entnommen werden.

Oben beschriebene Maßnahmen für das Erzielen von Schaumdichtigkeit im Grenzbereich der beiden Häute können vorteilhaft miteinander kombiniert werden, eine derartige Kombination ist aber nicht grundsätzlich zwingend notwendig.

Alternativ kann die Nut 6 beispielsweise mit einer Breite gestaltet sein, die etwas größer ist als die Breite der sich überdeckenden Randbereiche 7, 8. In diesem Fall wäre keine Klemmwirkung vorhanden. Trotzdem ist es möglich, allein aufgrund der anderen genannten Merkmale eine ausreichende Schaumdichtigkeit zu gewährleisten. Gleiches gilt für die Merkmale, dass der obere Rand 9 der Stege 10, 11 bis zur Rückseite der Haut 2 bzw. 3 reicht, und dass die Enden der abgewinkelten Randbereiche 7, 8 bis zum Boden der Nut 6 reichen, oder dass die Schaummasse derart eingebracht wird, dass die sich ausbreitende Schaummasse einen sich kompensierenden Druck auf die sich überdeckenden Randbereiche 7, 8 ausübt.

In diesem Ausführungsbeispiel ist die eine Haut 2 eine PU-Gießhaut, die andere Haut 3 ist eine Slushhaut aus PVC. Die Dicke beider Häute ist 0,8 mm. Beide Häute 2, 3 sind in ihrem Herstellungsprozess mit abgewinkelten Randbereichen 7, 8 geformt worden.

Der Träger 4 besteht in diesem Ausführungsbeispiel aus Polypropylen mit einem Glasfaseranteil von 20 Gew.-%. Er wurde in einem einzigen Spritzgussprozess hergestellt. Als Schaummasse wurde ein schäumbares Polyurethan verwendet. Die Dicke des Trägers beträgt hier 2,5 mm, die Dicke der Schaumschicht 3 mm.

Des Weiteren ist es möglich, während des Schäumvorgangs die nächsten Häute mit Träger vorzubereiten. Dies ist für eine Serienproduktion vorteilhaft, da die Zykluszeit kurz gehalten werden kann.

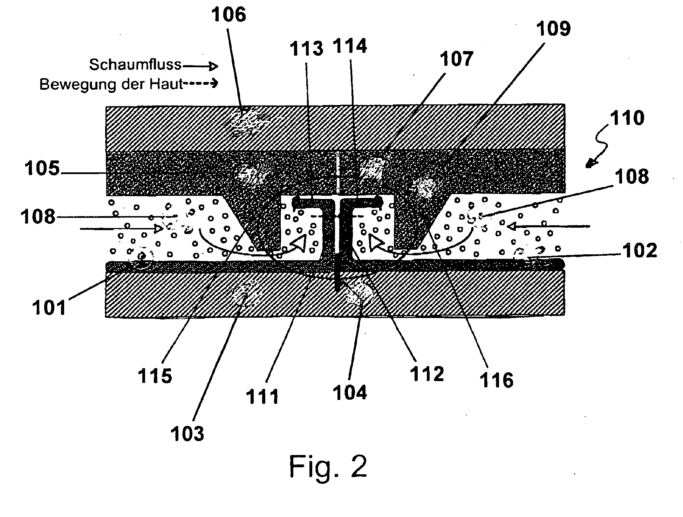

Gemäß dem Ausführungsbeispiel nach Fig. 2 wird für ein erfindungsgemäßes Verfahren ein Träger 105 in einem Oberwerkzeug 6 eines Schäumwerkzeuges angeordnet.

In einem Unterwerkzeug 103 werden eine erste Haut 101 und eine zweite Haut 102 rechts und linksseitig eines sich im Unterwerkzeug befindenden, teilweise über die Werkzeugoberfläche hinausstehenden versenkbaren Schwerts 104 angeordnet. Die Endbereiche der beiden Häute sind jeweils zweimal um 90° entlang der Kante spiralförmig nach innen abgewinkelt und bilden damit einen ersten, um 90° abgewinkelten Bereich 111, 112 und einen zweiten, um 90° abgewinkelten Bereich 113, 114. Der zweite abgewinkelte Bereich 113, 114 ist somit planparallel zu dem gegenüberliegenden Bereich der Haut 101 bzw. 102. Eine vorteilhafte Ausrichtung der Endbereiche ist insbesondere von der Oberflächenform des gegenüber liegenden Trägers abhängig. Grundsätzlich sind auch nicht planparallele Orientierungen möglich.

Die Häute 101, 102 werden derart angeordnet, dass die ersten abgewinkelten Bereiche 111, 112 einander benachbart sind und von der Oberfläche des Unterwerkzeugs 103 weggerichtet sind. In diesem Falle werden die ersten abgewinkelten Bereiche 111, 112 senkrecht zur Oberfläche des Unterwerkzeugs 103 orientiert.

Des Weiteren werden die Häute 101, 102 derart angeordnet, dass die zweiten abgewinkelten Bereiche 113, 114 voneinander weggerichtet sind und der Oberfläche des Trägers 105 (bei geschlossenem Werkzeug) gegenüberliegen. In diesem Falle werden die zweiten abgewinkelten Bereiche parallel zur Oberfläche des Oberwerkzeuges 106 ausgerichtet.

Der Träger 105 ist in dem Bereich, der den abgewinkelten Bereichen 113, 114 gegenüberliegt, mit konstanter Schichtdicke ausgebildet. Da die Oberflächen von Unterwerkzeug 103 und Oberwerkzeug 105 zueinander ebenfalls planparallel sind, ist die Oberfläche der abgewinkelten Bereiche 113, 114 der Häute 101, 102 planparallel zur gegenüber liegenden Oberfläche des Trägers 105, beide weisen dieselbe Oberflächenform auf.

Träger 105 und Häute 101, 102 sind dabei derart ausgebildet, dass die Spaltbreite zwischen den zweiten abgewinkelten Bereichen 113, 114 und der Oberfläche des Trägers 105 bei geschlossenem Werkzeug im Bereich von 0,5 mm bis 1 mm liegt.

Durch Anlegen eines Unterdrucks über nicht näher dargestellte Entlüftungsöffnungen im Unterwerkzeug 103 werden die im Unterwerkzeug angeordneten Häute 101, 102 in ihrer Position fixiert. Am Schwert 104, welches in diesem Falle aus einem porösen Material besteht, wird ebenfalls ein Unterdruck angelegt, wodurch die Häute 101, 102 zum einen an das Schwert 104 angepresst werden, zum anderen ein möglicher Spalt zwischen den ersten abgewinkelten Bereichen 111, 112 geschlossen wird.

Der Träger 105 ist mit zwei in die Kavität hineingerichteten Vorsprünge 115, 116 ausgebildet, die bei geschlossenem Werkzeug beidseitig der zweiten abgewinkelten Bereiche 113, 114 der ersten und zweiten Haut 101, 102 entlang des gesamten, abzudichtenden Grenzbereiches der beiden Häute verlaufen. Die Vorsprünge definieren damit eine Nahtkammer 109 bzw. der Nut 6, von der die abgewinkelten Endbereiche 111, 112, 113, 114 umfasst werden.

Die den Endbereichen zugewandten Seiten der beiden Vorsprünge 15, 16 sind senkrecht zur Grundfläche und damit senkrecht zur Oberfläche des Oberwerkzeugs 106 orientiert, die abgewandten Seiten sind angeschrägt und führen zu einem sich zu dem Grenzbereich der Häute bzw. zur Nahtkammer 109 hin verjüngenden Spalt. Die Vorsprünge 115, 116 reichen weit über die Höhe der abgewinkelten Endbereiche 113, 114 in Richtung Unterwerkzeug hinaus, die Spaltbreite zwischen Häuten 101, 102 und Vorsprüngen 115, 116 beträgt an der Stelle der maximalen Verjüngung etwa die Hälfte der Schaumstärke zwischen Häuten 101, 102 und Träger 105, in diesem Falle 4 mm.

Danach wird das Werkzeug geschlossen.

Über zwei Schaummischköpfe (nicht dargestellt) wird rechts und linksseitig des durch das Schwert 104 definierten Grenzbereiches der beiden Häute 101, 102 eine Schaumasse 108 in die durch Träger 105 und Häute 101, 102 definierte Kavität eingebracht. Dabei können, wie im ersten Ausführungsbeispiel, Öffnungen im Träger 105 beidseitig der Nut 6 vorgesehen sein, durch die die Schaummasse eingespritzt wird. Im Ausführungsbeispiel ist die Schaummasse rechts- und linksseitig identisch und wird zeitgleich eingebracht. Alternativ sind auch unterschiedliche Schaummassen möglich, beispielsweise um eine unterschiedliche Haptik des Verbundteils zu erzeugen. Des Weiteren können die Schaummassen, abhängig von der gewünschten Ausbreitung des Schaums, zeitversetzt eingebracht werden.

Eintrittsort und Zeitpunkt des Einbringens der Schaummassen ist so gewählt, dass die Schaummasse mit ihren Schaumfronten gleichzeitig die durch Vorsprünge 115, 116 umschlossene Nahtkammer 109 erreichen.

Unterstützt durch die angeschrägten Vorsprüngen 115, 116 wird die Schaummasse 108 in die Nahtkammer 109 bzw. Nut 6 gegen die ersten abgewinkelten Bereiche 111, 112 und unter die zweiten abgewinkelten Bereiche 113, 114 geleitet ("Schaumfluss", in der Figur mit durchgehenden Pfeilen dargestellt). Die Schaummasse 108 presst die ersten abgewinkelten Bereiche gegeneinander, und die zweiten abgewinkelten Bereiche gegen den Träger 105 ("Bewegung der Haut", gestrichelte Pfeile). Durch das Aushärten des Schaums wird das Pressen der ersten abgewinkelten Bereiche 111, 112 gegeneinander und der zweiten abgewinkelten Bereiche 113, 114 gegen den Träger 105 zusätzlich verstärkt. Der Schaum dringt lediglich im Bereich der Endkanten der Häute 101, 102 zwischen zweiten abgewinkelten Bereichen 113, 114 und Träger 105 ein, der größte Teil der Fläche von den zweiten abgewinkelten Bereichen 113, 114 ist jedoch direkt flächig mit der Oberfläche des gegenüberliegenden Trägers in Kontakt.

Der Träger 105 ist mit einem Entlüftungskanal 107 ausgebildet, der nach korrektem Anordnen des Trägers und Schließen des Werkzeugs direkt über dem Schwert 104 positioniert ist. Über diesen Entlüftungskanal 107 wird die Kavität im Bereich der Nahtkammer 109 entlüftet. Die Entlüftung wird zusätzlich dadurch unterstützt, dass ein Unterdruck an diesem Kanal 107 angelegt wird. Der Unterdruck darf nicht zu groß sein, damit die Entlüftung nicht durch ein Ansaugen der zweiten abgewinkelten Bereiche 113, 114 gegen die Oberfläche des Trägers 105 ihre Wirkung verliert.

Diesen Zustand des Verfahrens zeigt die Figur 2.

Während des Aushärtens der Schaummasse 108 wird das Schwert 104 vollständig im Unterwerkzeug 103 versenkt. Durch den Druck der Schaummasse rücken die Häute 101, 102 in den vom Schwert 104 freigegebenen Raum nach. Die sichtseitige Nut zwischen den Häuten schließt sich nahezu vollständig.

Nachdem die Schaummasse 108 durch den Aushärtevorgang genug Steifigkeit erreicht hat, kann das so hergestellte Verbundteil 110 mit einer durch die Häute 101, 102 gebildeten mehrteiligen Deckschicht, hier eine Instrumententafel 110, dem Schäumwerkzeug entnommen werden.

Der Träger 105 ist in diesem Ausführungsbeispiel aus PP mit einem Glasfaseranteil. Selbstverständlich sind andere Materialien möglich, insbesondere thermoplastische Kunststoffe wie POM oder ABS/PC, einschließlich Zusätzen wie beispielsweise Fasern oder Mineralien. Die Dicke des Trägers ist etwa 2,4 mm.

Die erste Haut 101 ist eine PVC-Slush-Haut mit einer Stärke von 1,0 mm. Die zweite Haut 102 ist eine TPU-Slush-Haut mit einer Stärke ebenfalls von 1,0 mm. Die abgewinkelten Endbereiche beider Häute wurden im Rahmen des Slush-Prozesses vorgeformt.

Als Schaummasse 108 wird in diesem Falle ein PU-Schaum verwendet.

Alternativ zu obigen Schäumverfahren ist es ebenfalls möglich, die Schaummasse bei geöffnetem Werkzeug einzubringen und dann erst das Werkzeug zu schließen.

In einer weiteren Ausführungsform des erfindungsgemäßen Verfahrens wird das Schwert 104 nicht versenkt. Das so erzeugte Verbundteil weist eine Design-Nut im Bereich der Trennlinie der beiden Häute 101, 102 auf.

## Patentansprüche

1. Verkleidung (1) mit zwei aneinandergrenzenden flächigen, eine mehrteilige Deckschicht bildenden Häuten (2, 3, 101, 102), einem flächigen Träger (4, 105) und einer zwischen den Häuten und dem Träger liegenden Schaumschicht (5, 108), **dadurch gekennzeichnet, dass** der Träger (4, 105) eine in Richtung der Häute offene, entlang des Grenzbereichs der beiden Häute verlaufende Nut (6) aufweist, in die ein abgewinkelter Randbereich (7, 111) der ersten Haut (2, 101) und ein abgewinkelter Randbereich (8, 112) der zweiten Haut (3, 102) zumindest teilweise eingeführt sind.

2. Verkleidung nach Anspruch 1, **dadurch gekennzeichnet, dass** die abgewinkelten Randbereiche (7, 8, 111, 112) der beiden Häute (2, 3; 101, 102) entlang des Grenzbereiches flächig aneinander liegen.

3. Verkleidung nach einem der vorhergehenden Ansprüche, **dadurch gekennzeichnet, dass** die abgewinkelten Randbereiche (7, 8) der beiden Häute (2, 3) in der Nut (6) entlang des Grenzbereiches eingeklemmt sind.

4. Verkleidung nach einem der vorhergehenden Ansprüche, **dadurch gekennzeichnet, dass** der obere Rand (9) der Nut (6) bis an die Rückseite zumindest einer Haut, vorzugsweise beider Häute (2, 3), heranreicht.

5. Verkleidung nach einem der vorhergehenden Ansprüche, **dadurch gekennzeichnet, dass** die Nut (6) durch beidseitig des Grenzbereiches verlaufende, vom Träger (4, 105) geformte Stege (10, 11; 115, 116) gebildet wird oder dass der Träger eine Nut bildende Vertiefung oder Ausformung aufweist.

6. Verkleidung nach einem der Ansprüche 1, 2 oder 5, **dadurch gekennzeichnet, dass** die erste Haut (101) und die zweite Haut (102) zweifach abgewinkelte Endbereiche (111, 112, 113, 114) aufweisen, wobei die ersten abgewinkelten Bereiche (111, 112) der ersten und zweiten Haut (101, 102) zueinander benachbart und in die Schaumschicht (108) hineingerichtet sind, und die zweiten abgewinkelten Bereiche (113, 114) der ersten und zweiten Haut (101, 102) voneinander weggerichtet sind und der Oberfläche des Trägers (105) gegenüberliegen.

7. Verkleidung nach Anspruch 6, **dadurch gekennzeichnet, dass** die zweiten abgewinkelten Bereiche (113, 114) flächig mit dem Träger (105) in direktem Kontakt sind.

8. Verfahren zur Herstellung einer Verkleidung mit zwei aneinandergrenzenden flächigen, eine mehrteilige Deckschicht bildenden Häuten (2, 3; 101, 102), einem flächigem Träger (4, 105) und einer zwischen den Häuten und dem Träger (4, 105) liegenden Schaumschicht (5, 108), enthaltend die Schritte: a) Zumindest teilweises Einführen eines abgewinkelten Randbereichs (7, 111) der ersten Haut (2, 101) und eines abgewinkelten Randbereichs (8, 112) der zweiten Haut (3, 102) in eine vom Träger (4, 105) in Richtung der Häute offene, entlang des vorgesehenen Grenzbereichs der beiden Häute verlaufende Nut (6); b) Einbringen einer Schaummasse zwischen Träger (4, 105) und Häuten (2, 3; 101, 102).

9. Verfahren nach Anspruch 8, **dadurch gekennzeichnet, dass** die abgewinkelten Randbereiche (7, 8) der Häute (2, 3) in der Nut (6) eingeklemmt werden.

10. Verfahren nach Anspruch 8 oder 9, **dadurch gekennzeichnet, dass** die Schaummasse rechts- und linksseitig des Grenzbereiches der Häute (2, 3; 101, 102) eingeführt wird.

11. Verfahren nach Anspruch 8 oder Anspruch 10, **gekennzeichnet durch** die Schritte: a) Anordnen des Trägers (105) in einer ersten Werkzeughälfte (106) eines Werkzeugs; b) Anordnen der ersten Haut (101) und der zweiten Haut (102) mit zumindest zweifach abgewinkelten Endbereichen (111, 112, 113, 114) an der Oberfläche einer zweiten Werkzeughälfte (103) derart, dass die ersten abgewinkelten Bereiche (111, 112) der ersten und zweiten Haut (102) zum einen von der Oberfläche der zweiten Werkzeughälfte (103) weggerichtet sind, und zum anderen zueinander benachbart sind, und derart, dass die zweiten abgewinkelten Bereiche (113, 114) der ersten und zweiten Haut (102) voneinander weggerichtet sind und der Oberfläche des Trägers (105) gegenüberliegen; c) Hinterschäumen der ersten und zweiten Haut (101, 102).

12. Verfahren nach Anspruch 11, **dadurch gekennzeichnet, dass** die Schaummasse (108) derart in das Werkzeug eingebracht und gegebenenfalls gelenkt wird, dass die Schaumfronten die Endbereiche (111, 112, 113, 114) der Häute (101, 102) gleichzeitig erreichen.

13. Verfahren nach einem der vorherigen Ansprüche, **dadurch gekennzeichnet, dass** die erste Haut (101) und die zweite Haut (102) jeweils an einer Seite eines sich an der Oberfläche der zweiten Werkzeughälfte (103) befindenden Vorsprungs (104) angeordnet werden.

14. Verfahren nach Anspruch 13, **dadurch gekennzeichnet, dass** über den Vorsprung (104) ein Unterdruck angelegt wird, der die Häute am Vorsprung fixiert.

15. Verfahren nach einem der Ansprüche 6 bis 7, **dadurch gekennzeichnet, dass** der Vorsprung während des Aushärtens der Schaummasse (5, 108) zumindest teilweise in der zweiten Werkzeughälfte (103) versenkt wird.

16. Verfahren nach einem der vorhergehenden Ansprüche, **dadurch gekennzeichnet, dass** das Schäumwerkzeug im Bereich der abgewinkelten Endbereiche (111, 112, 113, 114), vorzugsweise direkt über dem Vorsprung (104), über einen sich im Träger (4, 105) befindenden Entlüftungskanal (107, 113) entlüftet wird.

## Claims

1. Cladding (1) with two abutting, plane skins (2, 3, 101, 102), forming a multi-part covering layer, a plane support (4, 105) and a layer of foam (5, 108) which lies between the skins and the support, **characterised in that** the support (4, 105) has a channel (6), open in the direction of the skins and running along the boundary region of the two skins, into which a bent edge-region (7, 111) of the first skin (2, 101) and a bent edge-region (8, 112) of the second skin (3, 102) are at least partially inserted.

2. Cladding according to claim 1, **characterised in that** the bent edge-regions (7, 8, 111, 112) of the two skins (2, 3; 101, 102) lie against one another in a surface-to-surface manner along the boundary region.

3. Cladding according to any one of the preceding claims, **characterised in that** the bent edge-regions (7, 8) of the two skins (2, 3) are clamped in the channel (6), along the boundary region.

4. Cladding according to any one of the preceding claims, **characterised in that** the upper edge (9) of the channel (6) reaches as far as the rear of at least one skin, preferably both skins (2, 3).

5. Cladding according to any one of the preceding claims, **characterised in that** the channel (6) is formed by legs (10, 11; 115, 116) running on both sides of the boundary region and formed by the support (4, 105), or **in that** the support has a cavity or shaped region which forms a channel.

6. Cladding according to any one of claims 1, 2 or 5, **characterised in that** the first skin (101) and the second skin (102) have end regions (111, 112, 113, 114) which are bent twice, the first bent regions (111, 112) of the first and second skin (101, 102) being adjacent to one another and directed into the layer of foam (108), and the second bent regions (113, 114) of the first and second skin (101, 102) being directed away from one another and facing the surface of the support (105).

7. Cladding according to claim 6, **characterised in that** the second bent regions (113, 114) are in direct surface-to-surface contact with the support (105).

8. A process for producing cladding with two abutting, plane skins (2, 3; 101, 102), forming a multi-part covering layer, a plane support (4, 105) and a layer of foam (5, 108) which lies between the skins and the support (4, 105), comprising the steps: a) at least partial insertion of a bent edge-region (7, 111) of the first skin (2, 101) and a bent edge-region (8, 112) of the second skin (3, 102) into a channel (6) open from the support (4, 105) in the direction of the skins and running along the intended boundary region of the two skins; b) introduction of a foam substance between the support (4, 105) and the skins (2, 3; 101, 102).

9. A process according to claim 8, **characterised in that** the bent edge-regions (7, 8) of the skins (2, 3) are clamped in the channel (6).

10. A process according to claim 8 or 9, **characterised in that** the foam substance is inserted to the right and left of the boundary region of the skins (2, 3; 101, 102).

11. A process according to claim 8 or claim 10, **characterised by** the steps: a) arrangement of the support (105) in a first mould-half (106) of a mould; b) arrangement of the first skin (101) and the second skin (102), with at least twice-bent end regions (111, 112, 113, 114), at the surface of a second mould-half (103) in such a manner that the first bent regions (111, 112) of the first and second skin (102) are on the one hand directed away from the surface of the second mould-half (103) and on the other hand adjacent to one another, and in such a manner that the second bent regions (113, 114) of the first and second skin (102) are directed away from one another and face the surface of the support (105); c) introduction of foam behind the first and second skin (101, 102).

12. A process according to claim 11, **characterised in that** the foam substance (108) is introduced into the mould and optionally directed such that the foam fronts reach the end regions (111, 112, 113, 114) of the skins (101, 102) at the same time.

13. A process according to any one of the previous claims, **characterised in that** the first skin (101) and the second skin (102) are each arranged at a respective side of a projection (104) located at the surface of the second mould-half (103).

14. A process according to claim 13, **characterised in that** negative pressure is applied via the projection (104) and fixes the skins to the projection.

15. A process according to any one of claims 6 to 7, **characterised in that** the projection is at least partially sunk in the second mould-half (103) during curing of the foam substance (5, 108).

16. A process according to any one of the preceding claims, **characterised in that** the foaming mould is de-aerated in the region of the bent end-regions (111, 112, 113, 114), preferably directly above the projection (104), via a venting channel (107, 113) located in the support (4, 105).

## Revendications

1. Habillage (1), comprenant deux pellicules (2, 3, 101, 102) contiguës planes formant une couche de recouvrement en plusieurs parties, un support plan (4, 105) et une couche de mousse (5, 108) située entre les pellicules et le support, **caractérisée en ce que** le support (4, 105) présente une rainure (6) ouverte s'étendant dans la direction des pellicules le long de la zone limite des deux pellicules, dans laquelle rainure sont introduites au moins partiellement une zone de bord repliée (7, 111) de la première pellicule (2,101) et une zone de bord repliée (8, 112) de la seconde pellicule (3, 102).

2. Habillage selon la revendication 1, **caractérisé en ce que** les zones de bord repliées (7, 8, 111, 112) des deux pellicules (2, 3 ; 101, 102) s'appliquent l'une sur l'autre à plat le long de la zone limite.

3. Habillage selon l'une quelconque des revendications précédentes, **caractérisé en ce que** les zones de bord repliées (7, 8) des deux pellicules (2, 3) sont calées dans la rainure (6) le long de la zone limite.

4. Habillage selon l'une quelconque des revendications précédentes, **caractérisé en ce que** le bord supérieur (9) de la rainure (6) arrive contre la face arrière d'au moins une pellicule, de préférence des deux pellicules (2, 3).

5. Habillage selon l'une quelconque des revendications précédentes, **caractérisé en ce que** la rainure (6) est formée par des nervures (10, 11 ; 115, 116) façonnées par le support (4, 105) et s'étendant de part et d'autre de la zone limite ou en ce que le support présente un évidement ou un renfoncement formant une rainure.

6. Habillage selon l'une quelconque des revendications 1, 2 ou 5, **caractérisé en ce que** la première pellicule (101) et la seconde pellicule (102) présentent des zones terminales (111, 112, 113, 114) repliées deux fois, dans lequel les premières zones repliées (111, 112) des première et seconde pellicules (101, 102) sont adjacentes l'une à l'autre et orientées dans la couche de mousse (108) et les secondes zones repliées (113, 114) des première et seconde pellicules (101, 102) sont opposées l'une à l'autre et font face à la surface du support (105).

7. Habillage selon la revendication 6, **caractérisé en ce que** les secondes zones repliées (113, 114) sont en contact direct à plat avec le support (105).

8. Procédé de fabrication d'un habillage comprenant deux pellicules (2, 3 ; 101, 102) contiguës planes formant une couche de recouvrement en plusieurs parties, un support plan (4, 105) et une couche de mousse (5, 108) située entre les pellicules et le support (4, 105), comprenant les étapes consistant à : a) introduire au moins en partie une zone de bord repliée (7, 111) de la première pellicule (2, 101) et une zone de bord repliée (8, 112) de la seconde pellicule (3, 102) dans une rainure (6) ouverte s'étendant du support (4, 105) dans la direction des pellicules le long de la zone limite prévue des deux pellicules ; b) insérer une masse de mousse entre le support (4, 105) et les pellicules (2, 3 ; 101, 102).

9. Procédé selon la revendication 8, **caractérisé en ce que** les zones de bord repliées (7, 8) des pellicules (2, 3) sont calées dans la rainure (6).

10. Procédé selon la revendication 8 ou 9, **caractérisé en ce que** la masse de mousse est introduite du côté droit et du côté gauche de la zone limite des pellicules (2, 3 ; 101, 102).

11. Procédé selon la revendication 8 ou la revendication 10, **caractérisé par** les étapes consistant à: a) aménager le support (105) dans une première moitié d'un outil (106) ; b) aménager la première pellicule (101) et la seconde pellicule (102) avec des zones terminales (111, 112, 113, 114) au moins repliées deux fois à la surface d'une seconde moitié d'outil (103) de sorte que les premières zones repliées (111, 112) des première et seconde pellicules (102) soient, d'une part, opposées à la surface de la seconde moitié d'outil (103) et, d'autre part, adjacentes l'une à l'autre et que les secondes zones repliées (113, 114) des première et seconde pellicules (102) soient opposées l'une à l'autre et fassent face à la surface du support (105) ; et c) appliquer de la mousse au dos des première et seconde pellicules (101, 102).

12. Procédé selon la revendication 11, **caractérisé en ce que** la masse de mousse (108) est insérée dans l'outil et éventuellement dirigée de sorte que les fronts de mousse atteignent simultanément les zones terminales (111, 112, 113, 114) des pellicules (101, 102).

13. Procédé selon l'une quelconque des revendications précédentes, **caractérisé en ce que** la première pellicule (101) et la seconde pellicule (102) sont respectivement aménagées d'un côté d'une saillie (104) se trouvant à la surface de la seconde moitié d'outil (103).

14. Procédé selon la revendication 13, **caractérisé en ce que** l'on applique sur la saillie (104) une dépression qui fixe les pellicules sur la saillie.

15. Procédé selon l'une quelconque des revendications 6 à 7, **caractérisé en ce que** la saillie est noyée pendant le durcissement de la masse de mousse (5, 108) au moins en partie dans la seconde moitié d'outil (103).

16. Procédé selon l'une quelconque des revendications précédentes, **caractérisé en ce que** l'outil de moussage est ventilé dans la zone des zones terminales repliées (111, 112, 113, 114), de préférence directement sur la saillie (104), par le biais d'un canal de ventilation (107, 113) se trouvant dans le support (4, 105).
